# FASCICULE DE BREVET EUROPEEN

(11) **EP 2 499 470 B1**
(45) Date de publication et mention de la délivrance du brevet: **11.07.2018**
(21) Numéro de dépôt: 10787825.8
(22) Date de dépôt: 22.10.2010
(51) Int. Cl.: G01F 15/06, G01F 19/00, G01F 22/00, G01F 23/00

(54) **PROCEDE ET DISPOSITIF DE SUIVI DU CONTENU D'UN RESERVOIR MOBILE DE FLUIDE**
VERFAHREN UND EINRICHTUNG ZUR ÜBERWACHUNG DER INHALT EINES BEWEGLICHEN FLUSSIGKEITSBEHÄLTER
METHOD AND DEVICE FOR MONITORING THE CONTENTS OF A MOVING FLUID RESERVOIR.

(30) Priorité: 10.11.2009 FR 0957952
(43) Date de publication de la demande: 19.09.2012
(73) Titulaire: L'Air Liquide Société Anonyme pour l'Etude et l'Exploitation des Procédés Georges Claude, 75007 Paris (FR)
(72) Inventeur: BACOT, Patrick, F-92190 Meudon (FR); DURTSCHI, Franck-Stéphane, F-91430 Vauhallan (FR); VIGOR, Xavier, F-75015 Paris (FR)
(74) Mandataire: De Cuenca, Emmanuel Jaime
(86) Numéro de dépôt international: PCT/FR2010/052256
(87) Numéro de publication internationale: WO 2011/058258

(56) Documents cités:
- EP-A1- 1 988 327
- EP-A2- 1 983 251
- WO-A2-2004/049237
- WO-A2-2008/139081

## Description

L'invention concerne un procédé et un dispositif de suivi du contenu d'un réservoir mobile de fluide.

Par fluide on entend un corps liquide, gazeux ou diphasique liquide-gaz. Il peut s'agir par exemple d'un gaz industriel (azote, oxygène, argon, hydrogène, etc.) ou médical (oxygène ou autre). Selon son utilisation, ce fluide est conditionné dans un réservoir adapté, connectable à un dispositif utilisateur du fluide en question. Dans le domaine médical, ce dispositif peut être l'ensemble des moyens permettant d'administrer un gaz à un patient.

Un problème qui se pose est de connaître la quantité de fluide contenue dans le réservoir, par exemple pour anticiper son remplacement, ou encore pour savoir si l'on dispose d'une quantité suffisante de fluide dans un réservoir pour une application donnée. Dit autrement, il s'agit de connaître l'autonomie d'un réservoir mobile.

Ce problème est généralement résolu en mesurant directement la quantité de fluide dans le réservoir. Le document WO-A-2005/093377 décrit par exemple un affichage sur le réservoir de son autonomie restante évaluée par une mesure de la pression interne du réservoir par un manomètre. Cette solution présente plusieurs inconvénients : coût du dispositif de mesure, accroissement des risques de fuite pouvant poser un problème de sécurité si le fluide est dangereux (par exemple toxique ou inflammable), imprécision dans le cas d'une évaluation de la quantité par mesure de la pression, manque de lisibilité du résultat et encombrement créé par le câblage ou les tuyaux nécessaires.

Les documents EP 1 988 327 A1 et WO 2004/049237 A2 décrivent des dispositifs également de ce type mesurant une qualité de produit au sein d'un réservoir mobile et assurant la transmission sans fil de cette information.

Le document EP 1 983 251 A2 décrit une installation comprenant un dispositif de gaz médical se raccordant à un raccord de gaz d'une conduite de fourniture de gaz. Un capteur sans fil est fixé à la conduite et transmet une information de débit à une station de base distante.

Le document WO-A-2008/056082 décrit, quant à lui, un dispositif médical d'insufflation de gaz comprenant un circuit de sortie du gaz, un connecteur pour connecter un récipient sous pression dans lequel le gaz est conditionné, un détendeur placé entre le connecteur et le circuit de sortie du gaz, un capteur haute pression placé entre le connecteur et le détendeur, un débitmètre placé en sortie du détendeur. Le volume de gaz restant après détente est évalué grâce au capteur et au débitmètre lors d'une détente du gaz. Ce dispositif présente lui aussi certains inconvénients. Il nécessite une mesure de pression en amont du détendeur, avec les risques de fuite que cela comporte. Il faut que le réservoir soit connecté et qu'une consommation se produise pour pouvoir déduire le contenu résiduel du réservoir (s'il n'est pas connecté, cette détermination est impossible par la méthode décrite). Enfin, la méthode ne fonctionne pas si le contenu du réservoir est diphasique, car il y a alors un degré de liberté supplémentaire, la quantité de liquide présente dans le réservoir, qui n'est pas mesurée.

Un problème technique qui se pose est de pallier tout ou partie des inconvénients signalés ci-dessus, c'est-à-dire en particulier de fournir un procédé et un dispositif de suivi du contenu d'un réservoir mobile de fluide, éventuellement diphasique, qui minimise les coûts des appareils de mesure et les risques de fuites liés à une mesure effectuée au niveau du réservoir, qui permette de suivre le contenu indépendamment du fait que le réservoir soit connecté ou non à une application consommatrice, ou encore qui permette de connecter le réservoir à une seconde application consommatrice sans perte de l'information sur son contenu résiduel.

A cette fin, la solution de l'invention porte sur un dispositif comprenant :
- au moins une installation consommatrice d'un fluide ;
- au moins un réservoir mobile apte et destiné à fournir au moins ledit fluide et connecté par canalisations à ladite installation consommatrice, ledit réservoir mobile contenant à l'origine une quantité initiale donnée dudit gaz ; et
- des moyens d'évaluation de quantités dudit fluide consommées par ladite installation consommatrice en provenance dudit réservoir mobile, lesdits moyens d'évaluation étant solidaires de ladite installation consommatrice ;
caractérisé en ce qu'il comprend en outre :
- un émetteur, solidaire de ladite installation consommatrice, apte et destiné à envoyer par onde radio lesdites quantités évaluées par lesdits moyens d'évaluation ;
- un récepteur, solidaire dudit réservoir mobile, apte et destiné à recevoir lesdites quantités envoyées par ledit émetteur ; et
- une mémoire pouvant être lue, solidaire dudit réservoir mobile, apte et destinée à décompter de ladite quantité initiale donnée lesdites quantités reçues par ledit récepteur radio de façon à obtenir une quantité résiduelle dudit fluide contenu dans ledit réservoir mobile.

L'installation consommatrice peut être de toute nature compatible avec une alimentation en fluide à partir d'au moins un réservoir mobile. Le fluide est consommé sous une forme qui peut être différente de celle sous laquelle il est stocké, c'est à dire qu'il peut y avoir un changement d'état du fluide entre le réservoir et l'installation consommatrice. Le réservoir peut éventuellement contenir plusieurs fluides dans des compartiments séparés.

Le fluide peut être tout gaz industriel, sous forme gazeuse en général sous pression, ou bien diphasique (avec une partie liquéfiée). Plus particulièrement le fluide peut être de l'oxygène. Il peut également être de l'hydrogène. Le fluide peut être pur ou mélangé avec d'autres corps.

Le réservoir mobile peut être à côté, sur, ou même placé dans l'installation consommatrice de fluide. Celle-ci peut être fixe ou mobile. Elle peut être un véhicule ou un équipement destiné à être transporté.

Le réservoir est mobile en ce sens que, si le dispositif selon l'invention envisage le réservoir comme connecté à une installation consommatrice donnée, cette connexion a un début et une fin. Avant d'être connecté à l'installation consommatrice considérée, le réservoir a pu être connecté à une autre installation consommatrice et se vider partiellement du fluide considéré. Le réservoir pourra éventuellement être connecté à une autre installation ultérieurement (exemple : réservoir dont l'autonomie est supérieure à la quantité consommée par l'installation). Dans un autre cas de figure, le réservoir ne sert que pour une seule installation et est éventuellement remplacé par un autre réservoir, par exemple s'il est vide ou considéré comme utilisé (exemple : réservoir dont l'autonomie est inférieure à la quantité de fluide utilisée par une installation consommatrice).

Dans la présente demande, on considère qu'un élément est solidaire de l'installation consommatrice si, quand on déconnecte le réservoir, l'élément en question reste lié à l'installation consommatrice et n'est pas emporté avec le réservoir. A contrario, on dira qu'un élément est solidaire du réservoir si, quand on déconnecte ce réservoir, l'élément reste lié au réservoir. En général, les installations consommatrices ont un ou plusieurs points de connexion, ou connecteurs, sur lesquels vient se connecter un tube ou une canalisation, éventuellement flexible, en provenance du réservoir. En considérant le sens de l'écoulement du fluide, on dira que les éléments situés en aval du ou des connecteurs sont solidaires de l'installation, tandis que ceux situés en amont seront considérés comme solidaires du réservoir.

La connexion entre l'installation consommatrice et le réservoir peut être de différentes natures en fonction du fluide consommé et du type d'utilisation. Elle peut comprendre des éléments intermédiaires, comme par exemple un détendeur, une pompe... etc.

Les moyens d'évaluations sont typiquement des débitmètres, ou bien des appareils permettant de déterminer un débit ou une quantité de fluide. Ces appareils peuvent réaliser une mesure directe d'un ou plusieurs paramètres (pression, température, débit, etc.) permettant de remonter à des débits ou des quantités.

Par mémoire, on entend un dispositif mettant en oeuvre des semi-conducteurs et permettant de stocker de l'information. Lors d'une utilisation normale, la mémoire est destinée à rester fixée au réservoir mobile.

Par ailleurs, selon des modes de réalisation particuliers, l'invention peut comporter l'une ou plusieurs des caractéristiques suivantes :
- le dispositif comporte en outre au moins un afficheur de ladite quantité résiduelle lue dans ladite mémoire. Lors d'une utilisation normale, l'afficheur est destiné à rester fixé au réservoir mobile.
- ledit afficheur est permanent. Par « permanent », on veut dire que l'afficheur est apte à afficher ladite quantité résiduelle pendant au moins trois jours sans alimentation en énergie externe à l'afficheur.
- ledit afficheur met en oeuvre une encre électronique. Le papier électronique (également appelé *e-paper,* en anglais, ou encre électronique), est une technique d'affichage sur support en général souple (papier, plastique), modifiable électroniquement, cherchant à imiter l'apparence d'une feuille imprimée et qui, comme le papier, ne nécessite pas d'énergie pour laisser un texte ou une image affichée.
- ledit récepteur radio et ladite mémoire sont localisés dans une radio-étiquette solidaire dudit réservoir mobile.
- ladite radio-étiquette et ledit afficheur sont alimentés par couplage électromagnétique, de préférence par une boucle inductive située dans ladite radio-étiquette. Le couplage électromagnétique se fait avec un élément émetteur d'ondes électromagnétiques, tel qu'un lecteur de radio-étiquettes.
- ladite mémoire est apte et destinée à stocker au moins une information sur ledit fluide. Cette information concerne, de préférence, le nom ou la dénomination du fluide, une caractéristique physique et/ou une caractéristique d'usage telle qu'une date de fabrication ou d'expiration.
- ledit récepteur solidaire dudit réservoir mobile est également un émetteur-récepteur, apte et destiné à émettre par ondes radio des informations contenues dans ladite mémoire.
- ledit émetteur solidaire de ladite installation consommatrice est également un émetteur-récepteur, apte et destiné à recevoir par onde radio lesdites informations émises par ledit récepteur.

Les radio-étiquettes (connues sous le nom anglais de *RFID tags* ou *transponders* pour *Radio Frequency Identification*) sont de petites étiquettes, en général collées sur ou incorporées dans un objet quelconque. Elles comprennent au minimum une antenne associée à une puce électronique. Elles peuvent recevoir et/ou émettre des signaux. Elles peuvent contenir un identifiant et diverses informations.

Ces étiquettes peuvent être lues par un lecteur, dispositif actif émetteur d'ondes électromagnétiques. Les étiquettes peuvent comprendre un dispositif susceptible de capter une partie de l'énergie envoyée par le lecteur, par exemple une boucle inductive. Les étiquettes sont en général des dispositifs passifs qui tirent leur énergie uniquement de celle fournie par un lecteur au moment de la lecture. Selon la présente invention, cette énergie peut être fournie par l'émetteur radio solidaire de l'installation consommatrice.

L'invention concerne également un procédé de suivi du contenu d'un réservoir mobile, mettant en oeuvre au moins une installation consommatrice d'un fluide contenu dans ledit réservoir mobile, ledit réservoir mobile contenant une quantité initiale donnée dudit fluide, et comprenant les étapes suivantes :
a) On enregistre ladite quantité initiale donnée dudit fluide dans une mémoire solidaire dudit réservoir mobile ;
b) On établit au moins une connexion entre ledit réservoir mobile et ladite installation consommatrice dudit fluide ;
c) A partir de mesures réalisées sur ladite installation consommatrice ou ladite connexion, on évalue des quantités dudit fluide consommées par ladite installation consommatrice en provenance dudit réservoir mobile ; et
d) On transmet lesdites quantités par ondes radio à un récepteur solidaire dudit réservoir mobile et on décrémente dans ladite mémoire lesdites quantités de ladite quantité initiale de manière à obtenir une quantité résiduelle dudit fluide contenu dans ledit réservoir mobile, ladite quantité résiduelle étant enregistrée dans ladite mémoire.

La connexion établie à l'étape b) est une connexion fluide, c'est à dire destinée à véhiculer du fluide depuis le réservoir mobile vers l'installation consommatrice.

Les mesures réalisées à l'étape c) peuvent être notamment des mesures de débit, pression ou température. Elles doivent permettre de remonter à des quantités de fluide consommées, selon des modalités connues de l'homme du métier. Elles sont réalisées dans une partie solidaire de l'installation consommatrice.

Avant ou après leur transmission vers le récepteur solidaire du réservoir, ces quantités sont converties en des valeurs additives, de façon à pouvoir être décomptées d'une quantité initiale. Ces quantités additives sont de préférence une masse ou un volume pris dans des conditions de température et de pression normalisées.

La décrémentation opérée à l'étape d) consiste à soustraire une quantité de fluide consommée d'une quantité en mémoire, de façon à obtenir une quantité résiduelle dans le réservoir. On obtient donc une «jauge virtuelle » du réservoir, qui indique le contenu résiduel sans qu'aucune mesure ne soit faite sur le réservoir lui-même.

Par ailleurs, selon des modes de réalisation particuliers, l'invention peut comporter l'une ou plusieurs des caractéristiques suivantes :
- le procédé comprend en outre une étape e) d'affichage ladite quantité résiduelle grâce à un afficheur solidaire dudit réservoir mobile.
- ledit récepteur et ladite mémoire sont situés dans une radio-étiquette.
- ladite radio-étiquette et ledit afficheur sont alimentés par couplage électromagnétique, de préférence par induction. Ledit afficheur n'est pas nécessairement un consommateur d'énergie en permanence, mais sa mise à jour peut nécessiter de l'énergie.
- Le procédé comprend en outre les étapes suivantes :
   a1) On enregistre au moins une information sur ledit fluide dans ladite mémoire solidaire dudit réservoir mobile ;
   d1) On transmet ladite nature dudit fluide par ondes radio à un récepteur solidaire de ladite installation consommatrice ; et
   d2) On transmet ladite quantité initiale donnée dudit fluide par ondes radio audit récepteur solidaire de ladite installation consommatrice.

L'alimentation par induction de la radio-étiquette et de l'afficheur peut être obtenue grâce à une boucle inductive située dans ou à proximité de ces éléments. La boucle inductive permet de capter l'énergie envoyée par l'émetteur solidaire de l'installation consommatrice.

Le réservoir peut être équipé d'un émetteur radio, qui est de préférence confondu avec le récepteur. De même, l'installation consommatrice peut être dotée d'un récepteur radio, de préférence confondu avec l'émetteur utilisé pour transmettre les quantités consommées. En somme, selon un mode particulier, on utilise à la fois sur le réservoir et l'installation consommatrice des émetteurs-récepteurs. Ainsi, des informations peuvent être échangées de l'un vers l'autre. C'est ainsi que des informations concernant le fluide, inscrites dans la mémoire solidaire du réservoir, vont pouvoir être transmises vers l'installation consommatrice, dans le but, par exemple, de vérifier que le fluide est bien adapté à l'utilisation envisagée. Le décompte de la quantité résiduelle peut être effectué au niveau du réservoir, comme au niveau de l'installation consommatrice. Il peut être stocké et/ou affiché sur l'un ou l'autre.

D'autres particularités et avantages apparaîtront à la lecture de la description ci-après, faite en référence aux figures, parmi lesquelles :
- la figure 1 représente un exemple dispositif selon l'invention,
- la figure 2 représente un graphique illustrant l'évolution de la quantité (Q) de fluide contenu dans le réservoir mobile en fonction du temps (t).

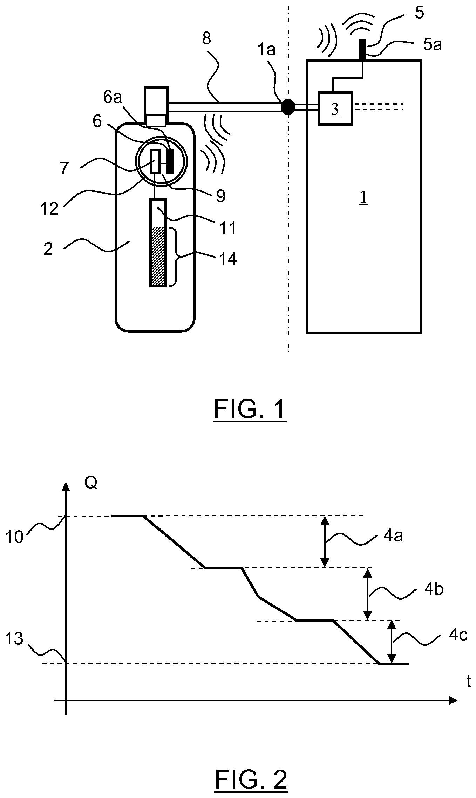

Sur la figure 1, on a représenté une installation 1 consommatrice d'un gaz industriel ou médical. Celui-ci provient d'un réservoir mobile 2 sous pression et transite par une canalisation 8, qui peut être par exemple un tuyau souple compatible avec le fluide considéré. La connexion se fait au point 1a, qui est un connecteur. Tout ce qui est en amont de ce point est considéré comme solidaire du réservoir 2. Tout ce qui est en aval est considéré comme solidaire de l'installation consommatrice 1.

Dans l'installation 1, un élément 3 est un compteur de gaz et mesure la quantité de fluide consommé par l'installation 1. Ces quantités sont par exemple exprimées en kg. Elles sont transmises à un émetteur radio 5 solidaire de l'installation 1 et envoyées à un récepteur 6 solidaire du réservoir 2. Cette transmission se fait dès qu'un certain laps de temps s'est écoulé, ou bien qu'une certaine quantité de fluide a été consommée. Ces informations sont décomptées dans une mémoire 7, inscriptible et lisible, solidaire du réservoir 2. La mémoire 7 contient initialement la dénomination du fluide contenu dans le réservoir 2 et la quantité initiale contenue. Au fur et à mesure de la consommation et du décompte, l'information « quantité » contenue dans la mémoire 7 baisse, de sorte qu'elle représente la quantité résiduelle de fluide dans le réservoir 2 sans qu'il y ait eu de mesure réelle de quantité dans ce réservoir 2. Le récepteur 6 et la mémoire 7 se trouve dans une radio-étiquette 9 alimentée par une boucle inductive 2 également située dans la radio-étiquette 9.

La quantité résiduelle calculée est affichée de manière permanente par un afficheur 11 solidaire du réservoir 2. Cet afficheur utilise la technique de l'encre électronique. Une certaine hauteur 14 d'encre indique une quantité résiduelle. Il est ainsi possible de lire la quantité résiduelle directement sur l'afficheur 11 ou bien en interrogeant la mémoire 7. La boucle inductive 12 transforme l'énergie de signaux radio qu'elle capte en énergie électrique pour le fonctionnement de la radio-étiquette et la mise à jour de l'afficheur 11.

L'émetteur 5 est aussi un émetteur-récepteur 5a. Le récepteur 6 est aussi un émetteur-récepteur 6a. Ainsi il est possible d'envoyer des données contenues dans la mémoire 7 vers l'installation consommatrice 1. Par exemple, on peut vérifier au niveau de l'installation 1 que le fluide contenu dans le réservoir 2 (et codé dans la mémoire 7) est de la nature voulue. On peut aussi afficher au niveau de l'installation 1 la quantité résiduelle inscrite dans la mémoire 7.

La figure 2 est un graphique représentant l'évolution de la quantité Q de fluide dans le réservoir 2 en fonction du temps t sur une certaine durée. Initialement, la quantité de fluide, en kg, contenue dans le réservoir est figurée par le niveau 10. Cette quantité est inscrite dans la mémoire 7 et éventuellement transmise à l'installation 1. Puis, des mesures de quantité consommées 4a, 4b, 4c sont effectuées au niveau de l'installation consommatrice 1. Elles sont décomptées de la quantité de fluide inscrite dans la mémoire 7. Après ces trois mesures, le niveau inscrit dans la mémoire 7 est figuré par le niveau 13. C'est aussi le niveau de fluide résiduel réel contenu dans le réservoir 2.

Les mesures 4a, 4b, 4c peuvent être des volumes incrémentaux correspondant à une utilisation donnée. Ils peuvent aussi résulter de calculs, comme par exemple l'intégration d'un débit instantané sur un pas de temps. Il existe un grand nombre de possibilités de mesure. L'information décomptée et l'information inscrite dans la mémoire 7 sont de même nature, par exemple en kg toutes les deux.

On comprend donc que les avantages de l'invention sont notamment :
- de pouvoir vérifier au niveau d'une installation consommatrice si le fluide contenu dans le réservoir convient,
- de pouvoir connaître, par lecture directe ou interrogation d'une mémoire de type radio-étiquette, la quantité initiale et/ou résiduelle dans un réservoir mobile,
- sans réaliser de mesure intrusive sur le réservoir et en éliminant tout problème de métrologie au niveau du réservoir mobile (par exemple, la nécessité de calibrer des capteurs),
- de ce fait de limiter les risques de fuites au niveau du réservoir ou de la canalisation en amont du connecteur,
- de réduire les coûts,
de suivre l'évolution de la quantité résiduelle (autonomie) et ce, même si le contenu du réservoir est diphasique.

## Revendications

1. Dispositif comprenant :
- au moins une installation consommatrice (1) d'un fluide ;
- au moins un réservoir mobile (2) apte et destiné à fournir au moins ledit fluide et connecté par canalisations (8) à ladite installation consommatrice (1), ledit réservoir mobile (2) contenant à l'origine une quantité initiale donnée (9) dudit gaz ; et
- des moyens d'évaluation (3) de quantités (4a, 4b, 4c) dudit fluide consommées par ladite installation consommatrice (1) en provenance dudit réservoir mobile (2), lesdits moyens d'évaluation (3) étant solidaires de ladite installation consommatrice (1) ;
- un émetteur (5), solidaire de ladite installation consommatrice (1), apte et destiné à envoyer par onde radio lesdites quantités (4a, 4b, 4c) évaluées par lesdits moyens d'évaluation (3) ;
**caractérisé en ce qu'**il comprend en outre :
- un récepteur (6), solidaire dudit réservoir mobile (2), apte et destiné à recevoir lesdites quantités (4) envoyées par ledit émetteur (5) ; et
- une mémoire (7) stockant ladite quantité initiale pouvant être lue, solidaire dudit réservoir mobile (2), apte et destinée à décompter de ladite quantité initiale donnée (9) lesdites quantités (4a, 4b, 4c) reçues par ledit récepteur radio (6) de façon à obtenir une quantité résiduelle (10) dudit fluide contenu dans ledit réservoir mobile (2) uniquement à partir des quantités évaluées par les moyens d'évaluation solidaires de l'installation consommatrice, c'est-à-dire sans qu'aucune mesure ne soit faite sur le réservoir mobile 2 lui-même, ledit récepteur radio (6) et ladite mémoire (7) étant localisés dans une radio-étiquette (9) solidaire dudit réservoir mobile (2).

2. Dispositif selon la revendication 1, **caractérisé en ce qu'**il comporte en outre au moins un afficheur (11) de ladite quantité résiduelle (10) lue dans ladite mémoire (7).

3. Dispositif selon la revendication 2, **caractérisé en ce que** ledit afficheur (11) est permanent.

4. Dispositif selon la revendication 3, **caractérisé en ce que** ledit afficheur (11) met en oeuvre une encre électronique.

5. Dispositif selon l'une quelconque des revendications 1 à 4, **caractérisé en ce que** ladite radio-étiquette (9) et ledit afficheur (11) sont alimentés par couplage électromagnétique, de préférence par une boucle inductive (12) située dans ladite radio-étiquette (9).

6. Dispositif selon l'une quelconque des revendications 1 à 5, **caractérisé en ce que** :
- ladite mémoire (7) est apte et destinée à stocker au moins une information sur ledit fluide ;
- ledit récepteur (6) solidaire dudit réservoir mobile (2) est également un émetteur-récepteur (6a), apte et destiné à émettre par ondes radio des informations contenues dans ladite mémoire (7) ; et
- ledit émetteur (5) solidaire de ladite installation consommatrice (1) est également un émetteur-récepteur (5a), apte et destiné à recevoir par onde radio lesdites informations émises par ledit récepteur (6).

7. Procédé de suivi du contenu d'un réservoir mobile (2), mettant en oeuvre au moins une installation consommatrice (1) d'un fluide contenu dans ledit réservoir mobile (2), ledit réservoir mobile (2) contenant une quantité initiale donnée (9) dudit fluide, et comprenant les étapes suivantes :
a) On enregistre ladite quantité initiale donnée (9) dudit fluide dans une mémoire (7) solidaire dudit réservoir mobile (2) ;
b) On établit au moins une connexion (8) entre ledit réservoir mobile (2) et ladite installation consommatrice (1) dudit fluide ;
c) A partir uniquement de mesures (3) réalisées sur ladite installation consommatrice (1) ou ladite connexion (8), on évalue des quantités (4a, 4b, 4c) dudit fluide consommées par ladite installation consommatrice (1) en provenance dudit réservoir mobile (2) ; et
d) On transmet (5) lesdites quantités (4a, 4b, 4c) par ondes radio à un récepteur (6) solidaire dudit réservoir mobile (2) et on décrémente dans ladite mémoire (7) lesdites quantités (4a, 4b, 4c) de ladite quantité initiale (9) de manière à obtenir une quantité résiduelle (10) dudit fluide contenu dans ledit réservoir mobile (2), ladite quantité résiduelle (10) étant enregistrée dans ladite mémoire (7).

8. Procédé selon la revendication 7, **caractérisé en ce qu'**il comprend en outre une étape e) d'affichage ladite quantité résiduelle (10) grâce à un afficheur (11) solidaire dudit réservoir mobile (2).

9. Procédé selon la revendication 8, **caractérisé en ce que** :
- ledit récepteur (6) et ladite mémoire (7) sont situés dans une radio-étiquette (9) ; et
- ladite radio-étiquette (9) et ledit afficheur (11) sont alimentés par couplage électromagnétique, de préférence par induction (12).

10. Procédé selon l'une quelconques des revendications 7 à 9, **caractérisé en ce qu'**il comporte en outre les étapes suivantes :
a1) On enregistre au moins une information sur ledit fluide dans ladite mémoire (7) solidaire dudit réservoir mobile (2) ;
d1) On transmet (6) ladite nature dudit fluide par ondes radio à un récepteur (5) solidaire de ladite installation consommatrice (1) ; et
d2) On transmet (6) ladite quantité initiale donnée (9) dudit fluide par ondes radio audit récepteur (5) solidaire de ladite installation consommatrice (1).

## Patentansprüche

1. Vorrichtung, umfassend:
- mindestens eine ein Fluid verbrauchende Anlage (1);
- mindestens einen beweglichen Behälter (2), der dazu geeignet und vorgesehen ist, zumindest das Fluid zu liefern, und mittels Leitungen (8) an die verbrauchende Anlage (1) angeschlossen ist, wobei der bewegliche Behälter (2) anfänglich eine gegebene Anfangsmenge (9) des Gases enthält; und
- Mittel (3) zur Ermittlung der Mengen (4a, 4b, 4c) des Fluids, die von der verbrauchenden Anlage (1) aus dem beweglichen Behälter (2) verbraucht werden, wobei die Mittel (3) zur Ermittlung mit der verbrauchenden Anlage (1) fest verbunden sind;
- einen Sender (5), der mit der verbrauchenden Anlage (1) fest verbunden und dazu geeignet und vorgesehen ist, die von den Mitteln (3) zur Ermittlung ermittelten Mengen (4a, 4b, 4c) durch Funkwellen zu senden;
**dadurch gekennzeichnet, dass** sie darüber hinaus umfasst:
- einen mit dem beweglichen Behälter (2) fest verbundenen Empfänger (6), der dazu geeignet und vorgesehen ist, die vom Sender (5) gesendeten Mengen (4) zu empfangen; und
- einen auslesbaren Speicher (7), der die Anfangsmenge speichert, mit dem beweglichen Behälter (2) fest verbunden ist, dazu geeignet und vorgesehen ist, von der gegebenen Anfangsmenge (9) die vom Funkempfänger (6) empfangenen Mengen (4a, 4b, 4c) so abzuziehen, dass eine Restmenge (10) des im beweglichen Behälter (2) enthaltenen Fluids ausschließlich ausgehend von den Mengen erhalten wird, die von den mit der verbrauchenden Anlage fest verbundenen Mitteln zur Ermittlung ermittelt werden, das heißt, ohne dass im beweglichen Behälter 2 selbst eine Messung erfolgt, wobei der Funkempfänger (6) und der Speicher (7) in einem mit dem beweglichen Behälter (2) fest verbundenen RFID-Etikett (9) angeordnet sind.

2. Vorrichtung nach Anspruch 1, **dadurch gekennzeichnet, dass** sie darüber hinaus mindestens eine Anzeige (11) der aus dem Speicher (7) ausgelesenen Restmenge (10) umfasst.

3. Vorrichtung nach Anspruch 2, **dadurch gekennzeichnet, dass** die Anzeige (11) permanent ist.

4. Vorrichtung nach Anspruch 3, **dadurch gekennzeichnet, dass** die Anzeige (11) als elektronische Tinte ausgeführt ist.

5. Vorrichtung nach einem der Ansprüche 1 bis 4, **dadurch gekennzeichnet, dass** das RFID-Etikett (9) und die Anzeige (11) durch elektromagnetische Kopplung, vorzugsweise durch eine im RFID-Etikett (9) befindliche Induktionsschleife (12), versorgt werden.

6. Vorrichtung nach einem der Ansprüche 1 bis 5, **dadurch gekennzeichnet, dass**:
- der Speicher (7) dazu geeignet und vorgesehen ist, mindestens eine Information über das Fluid zu speichern;
- der mit dem beweglichen Behälter (2) fest verbundene Empfänger (6) auch ein Sender-Empfänger (6a) ist, der dazu geeignet und vorgesehen ist, im Speicher (7) enthaltene Informationen mittels Funkwellen zu senden; und
- der mit der verbrauchenden Anlage (1) fest verbundene Sender (5) auch ein Sender-Empfänger (5a) ist, der dazu geeignet und vorgesehen ist, die vom Empfänger (6) gesendeten Informationen mittels Funkwellen zu empfangen.

7. Verfahren zur Verfolgung des Inhalts eines beweglichen Behälters (2) unter Verwendung mindestens einer ein Fluid, das im beweglichen Behälter (2) enthalten ist, verbrauchenden Anlage (1), wobei der bewegliche Behälter (2) eine gegebene Anfangsmenge (9) des Fluids enthält, und das die folgenden Schritte umfasst:
a) Speichern der gegebenen Anfangsmenge (9) des Fluids in einem Speicher (7), der mit dem beweglichen Behälter (2) fest verbunden ist;
b) Herstellen mindestens einer Verbindung (8) zwischen dem beweglichen Behälter (2) und der das Fluid verbrauchenden Anlage (1);
c) ausschließlich anhand von Messungen (3), die an der verbrauchenden Anlage (1) oder der Verbindung (8) durchgeführt werden, das Ermitteln der Mengen (4a, 4b, 4c) des Fluids, die von der verbrauchenden Anlage (1) aus dem beweglichen Behälter (2) verbraucht werden; und das
d) Übermitteln (5) der Mengen (4a, 4b, 4c) mittels Funkwellen an einen Empfänger (6), der mit dem beweglichen Behälter (2) fest verbunden ist, und das Verringern im Speicher (7) der Anfangsmenge (9) um die Mengen (4a, 4b, 4c) so, dass eine Restmenge (10) des im mobilen Behälter (2) enthaltenen Fluids erhalten wird, wobei die Restmenge (10) im Speicher (7) gespeichert wird.

8. Verfahren nach Anspruch 7, **dadurch gekennzeichnet, dass** es darüber hinaus einen Schritt e) des Anzeigens der Restmenge (10) mittels einer mit dem mobilen Behälter (2) fest verbundenen Anzeige (11) umfasst.

9. Verfahren nach Anspruch 8, **dadurch gekennzeichnet, dass**:
- der Empfänger (6) und der Speicher (7) sich in einem RFID-Etikett (9) befinden; und
- das RFID-Etikett (9) und die Anzeige (11) durch elektromagnetische Kopplung, vorzugsweise durch Induktion (12), versorgt werden.

10. Verfahren nach einem der Ansprüche 7 bis 9, **dadurch gekennzeichnet, dass** es darüber hinaus die folgenden Schritte umfasst:
a1) Speichern mindestens einer Information über das Fluid im Speicher (7), der mit dem beweglichen Behälter (2) fest verbunden ist;
d1) Übermitteln (6) der Beschaffenheit des Fluids durch Funkwellen an einen Empfänger (5), der mit der verbrauchenden Anlage (1) fest verbunden ist; und
d2) Übermitteln (6) der gegebenen Anfangsmenge (9) des Fluids durch Funkwellen an den Empfänger (5), der mit der verbrauchenden Anlage (1) fest verbunden ist.

## Claims

1. Device comprising:
- at least one fluid-using apparatus (1);
- at least one movable tank (2) capable of and intended for providing at least said fluid and connected via pipes (8) to said fluid-using apparatus (1), said movable tank (2) containing, at the outset, a given initial amount (9) of said gas; and
- means for assessing (3) amounts (4a, 4b, 4c) of said fluid used by said fluid-using apparatus (1) from said movable tank (2), said means for assessing (3) being rigidly connected to said fluid-using apparatus (1);
- a transmitter (5), rigidly connected to said fluid-using apparatus (1), capable of and intended for sending, via radio waves, said amounts (4a, 4b, 4c) assessed by said means for assessing (3);
**characterised in that** it further comprises:
- a receiver (6), rigidly connected to said movable tank (2), capable of and intended for receiving said amounts (4) sent by said transmitter (5); and
- a memory (7) storing said initial amount that can be read, rigidly connected to said movable tank (2), capable of and intended for deducting, from said given initial amount (9) said amounts (4a, 4b, 4c) received by said receiver radio (6) in such a way as to obtain a residual amount (10) of said fluid contained in said movable tank (2) only from the amounts assessed by the means for assessing rigidly connected to the fluid-using apparatus, i.e. without any measurement being taken on the movable tank 2 itself, said receiver radio (6) and said memory (7) being located in a radio-tag (9) rigidly connected to said movable tank (2).

2. Device according to claim 1, **characterised in that** it further comprises at least one display (11) of said residual amount (10) read in said memory (7).

3. Device according to claim 2, **characterised in that** said display (11) is permanent.

4. Device according to claim 3, **characterised in that** said display (11) implements electronic ink.

5. Device according to any of claims 1 to 4, **characterised in that** said radio-tag (9) and said display (11) are powered by electromagnetic coupling, more preferably by an inductive loop (12) located in said radio-tag (9).

6. Device according to any of claims 1 to 5, **characterised in that**:
- said memory (7) is capable and intended of storing at least one piece of information on said fluid;
- said receiver (6) rigidly connected to said movable tank (2) is also a transmitter-receiver (6a), capable of and intended for transmitting, by radio waves, information contained in said memory (7); and
- said transmitter (5) rigidly connected to said fluid-using apparatus (1) is also a transmitter-receiver (5a), capable of and intended for receiving, by radio waves, said information transmitted by said receiver (6).

7. Method for tracking the content movable tank (2), implementing at least one fluid-using apparatus (1) contained in said movable tank (2), said movable tank (2) containing a given initial amount (9) of said fluid, and comprising the following steps:
a) Said given initial amount (9) of said fluid is recorded in a memory (7) rigidly connected to said movable tank (2);
b) At least one connexion (8) is established between said movable tank (2) and said apparatus (1) using said fluid;
c) From only measurements (3) taken on said fluid-using apparatus (1) or said connection (8), amounts (4a, 4b, 4c) of said fluid used by said fluid-using apparatus (1) from said movable tank (2) are assessed; and
d) Said amounts (4a, 4b, 4c) are transmitted (5) by radio waves to a receiver (6) rigidly connected to said movable tank (2) and in said memory (7) said amounts (4a, 4b, 4c) of said initial amount (9) are decremented in such a way as to obtain a residual amount (10) of said fluid contained in said movable tank (2), said residual amount (10) being recorded in said memory (7).

8. Method according to claim 7, **characterised in that** it further comprises a step e) of displaying said residual amount (10) thanks to a display (11) rigidly connected to said movable tank (2).

9. Method according to claim 8, **characterised in that**:
- said receiver (6) and said memory (7) are located in a radio-tag (9); and
- said radio-tag (9) and said display (11) are powered by electromagnetic coupling, more preferably by induction (12).

10. Method according to any of claims 7 to 9, **characterised in that** it further comprises the following steps:
a1) At least one piece of information on said fluid is recorded in said memory (7) rigidly connected to said movable tank (2);
d1) Said nature of said fluid is transmitted (6) by radio waves to a receiver (5) rigidly connected to said fluid-using apparatus (1); and
d2) Said given initial amount (9) of said fluid is transmitted (6) by radio waves to said receiver (5) rigidly connected to said fluid-using apparatus (1).
